# EUROPEAN PATENT APPLICATION

(11) **EP 2 487 558 A1**
(43) Date of publication of application: **15.08.2012**
(21) Application number: 11154348.4
(22) Date of filing: 14.02.2011
(51) Int. Cl.: G06F 3/023

(54) **Systems and methods for character input using an input member on a mobile device**

(71) Applicant: Research In Motion Limited, Waterloo, ON N2L 3W8 (CA)
(72) Inventor: Vandeputte, Casey, Jonathan, Waterloo Ontario N2L 3L3 (CA)
(74) Representative: MERH-IP Matias Erny Reichl Hoffmann

(57) **Abstract**

Methods and systems for selecting input in a portable electronic device comprising a display and a plurality of input members are disclosed. At least some of the input members used in the methods and system are capable of achieving a first state and a second state. For example, the method includes detecting the start of a first state for one of the input members of the electronic device, such as a press, followed by the occurrence of a second state for the input member in the first state, such as a further actuation of the input member. In response to the occurrence of the second state during the first state, the method further includes determining the representations associated with the input member in the first state. The method further includes outputting the representations using the display, with one representation marked for selection and detecting the occurrence of another second state of the input member, such as another further actuation, and in response to the another second state, changing the representation marked for selection. The method further includes detecting an end of the first state and outputting the representation marked for selection using the display.

## Description

### FIELD OF TECHNOLOGY

The present disclosure relates to inputting date into portable electronic devices, including but not limited to portable electronic devices having touch screen displays and, more specifically, to systems and methods for entering special or accented characters, including characters with diacritical marks, using a single input member on a portable device.

### BACKGROUND

Electronic devices, including portable electronic devices, have gained widespread use and may provide a variety of functions including, for example, telephonic, electronic messaging, and other personal information manager (PIM) application functions. Portable electronic devices include, for example, several types of mobile stations such as simple cellular telephones, smart telephones, wireless personal digital assistants (PDAs), and laptop computers with wireless communication capabilities based on, for example, the 802.11 or Bluetooth^{®} communication protocols.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed. With continued demand for decreased size of portable electronic devices to facilitate portability, touch-sensitive displays continue to decrease in size. However, users continue to demand the full features of larger devices, such as media capability, graphics, and the ability to input a full character set.

Many portable electronic devices are used for data driven applications including written communication, such as applications for composing e-mail or text messaging. The decrease in the size of the portable electronic devices and their display areas makes access to a full keyboard difficult. However, users still desire to access the full array of language objects, such as accented characters or other symbols. For example, the desire to correctly input proper names in international business drives the desire for the rich, feature complete interface that facilitates the input of a far greater number of characters than can be shown on a typical keyboard.

Current methods provide for a selection list of special characters upon pressing and holding an input member. For example, when pressing and holding an input member for the letter "e," after a predetermined amount of time, the device displays a horizontal selection list containing the accented characters "é," "ë," "ê," and "è." Scrolling between the selections involves use of a track ball, arrow keys, or other scrolling devices. However, the placement of the scrolling devices makes the input of special characters awkward or cumbersome because using such a device requires two digits to enter a character, and holding one key may interfere with a sliding movement, or other movement, required by the second digit. Furthermore, for users who type in multiple languages must either wait the predetermined amount of time to select an accented letter or switch languages frequently, to take advantage of automatic character insertion offered by different language modules. For such users, either option produces delays and interrupts the flow of typing.

### BRIEF DESCRIPTION OF THE DRAWINGS

The accompanying drawings, which are incorporated in and constitute a part of this specification, illustrate several example embodiments of the present disclosure. In the drawings:
Figure 1 is a block diagram of a portable electronic device, consistent with disclosed example embodiments;
Figure 2 is a top plan view of a portable electronic device, consistent with disclosed example embodiments;
Figure 3 is a flow diagram of an example process for selecting an accented or special character, consistent with disclosed example embodiments; and
Figures 4A, 4B, 5A, 5B, and 6 each show an example output of a portable electronic device used for selecting a special character, consistent with disclosed example embodiments.

### DETAILED DESCRIPTION

Reference will now be made in detail to example embodiments of the invention, examples of which are illustrated in the accompanying drawings. For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to a portable electronic device. Examples of portable electronic devices include mobile, or handheld, wireless communication devices such as pagers, cellular phones, cellular smart-phones, wireless organizers, personal digital assistants, wirelessly enabled notebook computers, netbooks, tablets, and so forth. In certain example embodiments, the portable electronic device is a portable electronic device without wireless communication capabilities, such as a handheld electronic game device, digital photograph album, digital camera, or other portable device.

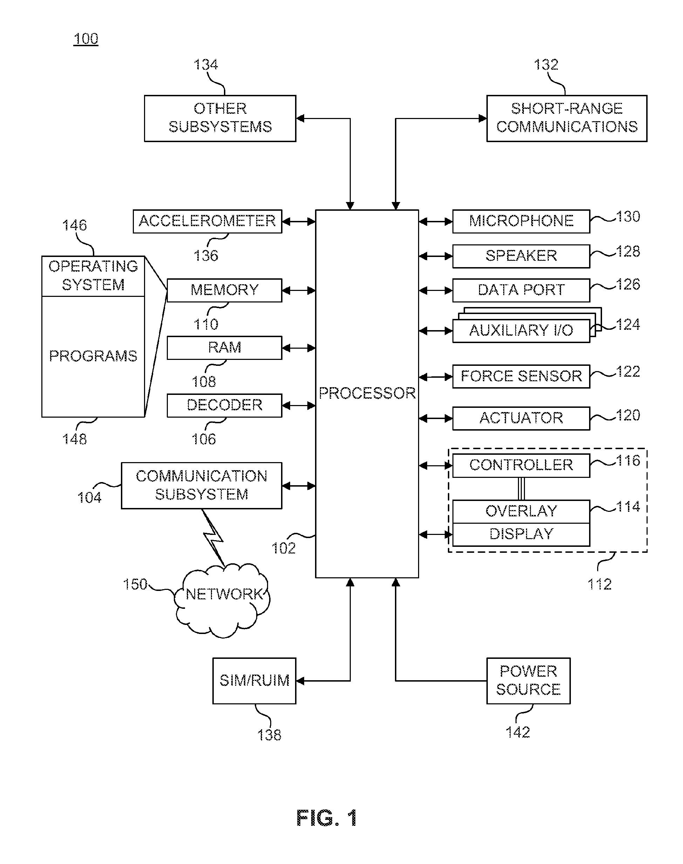

A block diagram of an example of a portable electronic device 100 is shown in Figure 1. Portable electronic device 100 includes multiple components, such as processor 102 that controls the overall operation of the portable electronic device 100. Processor 102 may be, for instance, and without limitation, a microprocessor (µP). Communication functions, including data and voice communications, are performed through communication subsystem 104. Data received by the portable electronic device 100 is optionally decompressed and decrypted by a decoder 106. Communication subsystem 104 receives messages from and sends messages to a wireless network 150. Wireless network 150 may be any type of wireless network, including, but not limited to, data wireless networks, voice wireless networks, and networks that support both voice and data communications. Power source 142, such as one or more rechargeable batteries or a port to an external power supply, power portable electronic device 100.

Processor 102 interacts with other components, such as Random Access Memory (RAM) 108, memory 110, and display 112. In example embodiments, display 112 has a touch-sensitive overlay 114 operably connected or coupled to an electronic controller 116 that together comprise touch-sensitive display 112. Processor 102 interacts with touch-sensitive overlay 114 via electronic controller 116. User-interaction with a graphical user interface is performed through the touch-sensitive overlay 114. Information, such as text, characters, symbols, images, icons, and other items that are displayed or rendered on portable electronic device 100, are displayed on the display 112 via the processor 102. Although described as a touch-sensitive display with regard to Figure 1, display 112 is not limited to a touch-sensitive display and can include any display screen for portable devices.

Processor 102 also interacts with one or more actuators 120, one or more force sensors 122, auxiliary input/output (I/O) subsystem 124, data port 126, speaker 128, microphone 130, short-range communications 132, and other device subsystems 134. Processor 102 interacts with accelerometer 136, which is utilized to detect direction of gravitational forces or gravity-induced reaction forces.

To identify a subscriber for network access, portable electronic device 100 uses a Subscriber Identity Module or a Removable User Identity Module (SIM/RUIM) card 138 for communication with a network, such as wireless network 150. In other example embodiments, user identification information is programmed into memory 110.

Portable electronic device 100 includes operating system 146 and software programs or components 148 that are executed by processor 102 and are stored in a persistent, updatable store such as memory 110 or nonvolatile memory such as RAM 108. Additional applications or programs are loaded onto portable electronic device 100 through wireless network 150, auxiliary I/O subsystem 124, data port 126, short-range communications subsystem 132, or any other suitable subsystem 134.

A received signal such as a text message, an e-mail message, or a web page download is processed by communication subsystem 104 and input to processor 102. Processor 102 processes the received signal for output to display 112 and/or to auxiliary I/O subsystem 124. A subscriber generates data items, for example e-mail or text messages, which are transmitted over wireless network 150 through communication subsystem 104. For voice communications, the overall operation of the portable electronic device 100 is similar. Speaker 128 outputs audible information converted from electrical signals, and microphone 130 converts audible information into electrical signals for processing. Speaker 128, display 112, and data port 126 are considered output apparatuses of device 100.

In example embodiments, display 112 is any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes capacitive touch-sensitive overlay 114. Overlay 114 is an assembly of multiple layers in a stack including, for example, a substrate, a ground shield layer, a barrier layer, one or more capacitive touch sensor layers separated by a substrate or other barrier, and a cover. The capacitive touch sensor layers are any suitable material, such as patterned indium tin oxide (ITO).

One or more touches, also known as touch contacts, touch events, or actuations, are detected by touch-sensitive display 112. Controller 116 or processor 102 determines attributes of the touch, including a location of a touch and the pressure of a touch. Touch location data includes an area of contact or a single point of contact, such as a point at or near a center of the area of contact. The location of a detected touch may include x and y components, e.g., horizontal and vertical components, respectively, with respect to one's view of touch-sensitive display 112. For example, the x location component may be determined by a signal generated from one touch sensor, and the y location component may be determined by a signal generated from another touch sensor. A signal is provided to controller 116 in response to detection of a touch. A touch can be detected from any suitable object, such as a finger, thumb, appendage, or other items, for example, a stylus, pen, or other pointer, depending on the nature of touch-sensitive display 112. In some example embodiments, controller 116 or processor 102 differentiate between a touch and a harder touch of an area of display 112. For example, processor 102 or controller 116 detects one input from a touch or gesture on an area of touch-sensitive display 112 and detects a second input when the user presses harder, or leans, on the same area of touch-sensitive display 112 without removing contact.

In some example embodiments, one or more actuators 120 are depressed by applying sufficient force to a touch-sensitive display 112 to overcome the actuation force of the actuator 120. Actuator 120 is actuated by pressing anywhere on touch-sensitive display 112. Actuator 120 provides input to the processor 102 when actuated. Actuation of the actuator 120 results in provision of tactile feedback. In certain example embodiments, actuator 120 includes pressure sensitive elements, so that actuator 120 sends one input to processor 102 when pressed and a second input to processor 102 when pressed harder. In other example embodiments, a mechanical dome switch is utilized as one or more of actuators 120. In this example, tactile feedback is provided when the dome collapses due to imparted force and when the dome returns to the rest position after release of the switch.

In other example embodiments, actuator 120 comprises one or more piezoelectric (piezo) devices that provide tactile feedback for the touch-sensitive display 112. Contraction of the piezo actuators applies a spring-like force, for example, opposing a force externally applied to the touch-sensitive display 112. Each piezo actuator includes a piezoelectric device, such as a piezoelectric (PZT) ceramic disk adhered to a metal substrate. The metal substrate bends when the PZT disk contracts due to build up of charge at the PZT disk or in response to a force, such as an external force applied to touch-sensitive display 112. The charge is adjusted by varying the applied voltage or current, thereby controlling the force applied by the piezo disks. The charge on the piezo actuator is removed by a controlled discharge current that causes the PZT disk to expand, releasing the force thereby decreasing the force applied by the piezo disks. The charge is advantageously removed over a relatively short period of time to provide tactile feedback to the user. Absent an external force and absent a charge on the piezo disk, the piezo disk is slightly bent due to a mechanical preload. Actuator 120, display 112, force sensor 122, microphone 130, and data port 126 are considered input apparatuses for device 100.

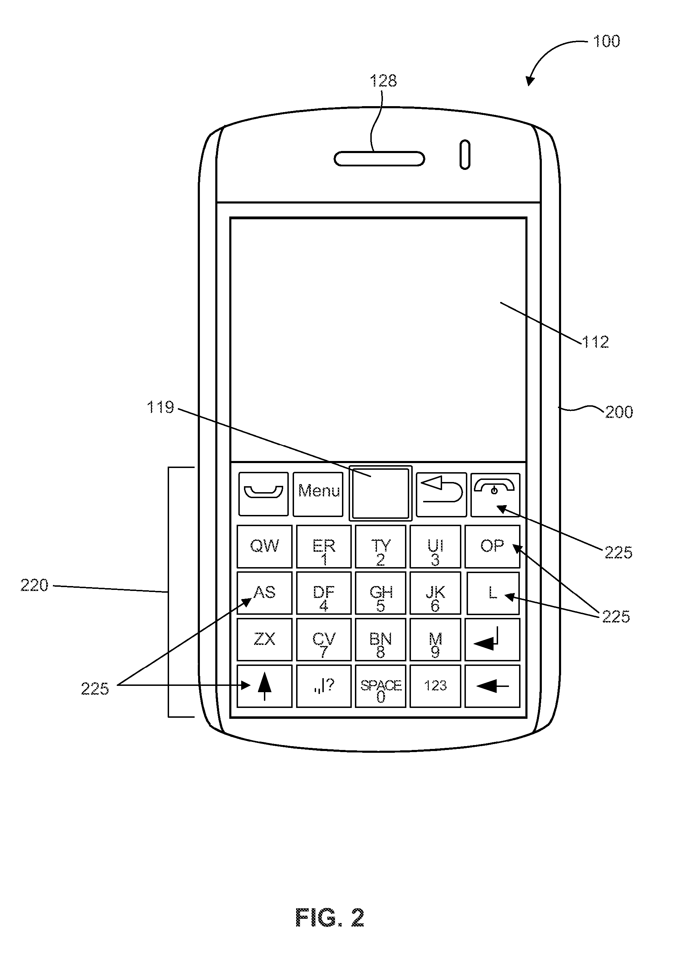

A top plan view of an example portable electronic device is shown generally in Figure 2. Example portable electronic device 100 includes housing 200 in which various components shown in Figure 1 are disposed. For example, various input apparatuses and output apparatuses, processor 102, and memory 110 for storing at least programs 148 are disposed in housing 200. Processor 102 is responsive to input signals from input apparatuses, such as the touch-sensitive display 112 or actuator 120, and optionally provides output signals to output apparatuses, such as display 112 or speaker 128. Processor 102 also interfaces with memory 110 and is enabled to execute programs 148.

As can be understood from Figure 2, the output apparatuses include display 112 and speaker 128, each of which are responsive to one or more output signals from processor 102 or controller 116. The input apparatuses include keyboard 220. As described above, in example embodiments input members 225 on keyboard 220 are rendered on touch-sensitive display 112. For example, each input member is defined by specific coordinates of display 112. Alternatively, input members 225 are mechanical keys using, for example, a mechanical dome switch actuator or a piezoelectric actuator, such as actuators 120.

At least some of input members 225 are associated with multiple states detectable by processor 102 or controller 116 such as, for example, a first state occurring when a user presses or touches the input member and lasting until the user releases the input member. A second state occurs when a user further actuates the input member during the first state, for example, by applying additional pressure to the input member, and lasts until the further actuation (additional pressure) is released. In example embodiments, processor 102 or controller 116 detects several occurrences of the second state during an occurrence of the first state.

In certain example embodiments, processor 102 or controller 116 recognizes the first state when a user presses a pressure sensitive input member, such as the key system described in U.S. Patent No. 7,385,530, incorporated herein by reference. In such an embodiment, processor 102 recognizes the second state when a user applies additional pressure to the pressure sensitive input member, with the second state ending when the additional pressure is released. In other example embodiments, processor 102 recognizes the first state when the user touches an input member that detects capacitance, as described in U.S. Application No. 12/892,113 for a Multi-Action Capacitive Switch, incorporated herein by reference. In such an embodiment, processor 102 recognizes the second state when a user actuates (depresses) the capacitive switch, with the second state ending at the end of the actuation. In other example embodiments using a touch screen, processor 102 or controller 116 recognizes the first sate when a user touches the input member and recognizes the second state after a predetermined time elapses without the user releasing the touch. In such an embodiment, the second state ends at the elapse of another predetermined time, which may be zero, such that the second state ends at the same time that it begins. The configuration of a dual-state input member is not important, so long as the input member is capable of being in a first state (e.g. during a touch or press) and a second state (e.g. while additional pressure is applied to the input member during the first state).

In certain example embodiments, input members 225 form a QWERTY keyboard or other known keyboard layouts, either in reduced or full format. In a reduced keyboard layout, input members are assigned a number of characters. In the presently described example embodiment shown in Figure 2, each input member 225 corresponds to a number of characters or other linguistic elements. Input members 225 as shown in Figure 2 correspond generally to three characters, with some input members corresponding to one or two characters. However, in other example embodiments, keyboard 220 corresponds to a full keyboard, and each input member 225 corresponds generally to one character. As used herein, characters refers to letters, numbers, or symbols found on a keyboard. Special characters refers broadly to letters, numbers, or symbols that are part of a font, but not necessarily displayed on the keyboard, such as accented letters, small graphics, or foreign currency symbols.

Example embodiments of handheld electronic device 100 include other input devices 119 on the face or side of device 100. In Figure 2, input device 119 is shown as an optical trackpad. Other options include a scroll wheel or a trackball. In certain example embodiments, input device 119 also includes a mouse operably connected to device 100. These input devices provide additional input to processor 102. Input members 225, actuators 120, and input devices 119, such as a scroll wheel or trackpad, are generally considered input members.

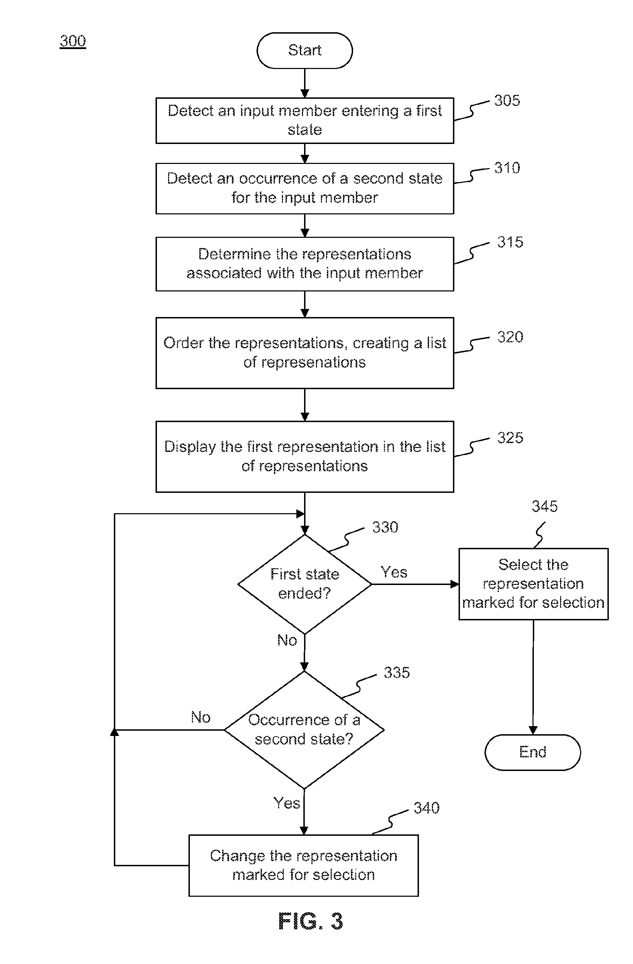

Figure 3 is a flow diagram of an example process 300 for selecting a special character, consistent with disclosed embodiments. Method 300 is carried out by software or firmware stored, for example as part of programs 148, that is stored in Random Access Memory (RAM) 108 or memory 110, and is executed by, for example, processor 102 as described herein, or by controller 116. Process 300 is used to select representations associated with the characters corresponding to an input member for output to an output apparatus using only the input member. Representations include accented characters, symbols, special characters, or punctuation marks. Representations also include text shortcuts, such as emoticons or chat acronyms used, for example, in short message service (SMS), instant message (IM), or BlackBerry Messenger ® (BBM) sessions, that begin with a character corresponding to the input member. The process is used to select a representation using a single input member.

At Step 305, processor 102 detects an input member entering a first state. As described above, the first state includes a touch of a touch-screen input member or a capacitive switch input member, or a press of a pressure sensitive input member. In example embodiments, processor 102 causes a default character associated with the input member to be displayed on the output apparatus as a result of the input member entering the first state. At Step 310, processor 102 detects the occurrence of a second state for the input member, such as a further actuation using additional pressure, or the elapse of a predetermined amount of time. Example embodiments enable a user to cause occurrence of the second state of the input member immediately after entry of the input member into the first state. Because of this, example embodiments allow faster entry of accented characters by eliminating the need to wait a required period of time for a display of accented characters and the need to perform any additional hand movements to select a character from the display. Such additional movements interrupt typing flow and slow down text input.

At Step 315, processor 102 determines the representations associated with the input member. In example embodiments, the representations include accented characters. For example, the representations of "è," "é," "ê," and "ë" are associated with the input member for the character "e." Representations also include symbols, such that the dollar sign "$" is associated with the input member for the character "d." In some example embodiments representations also include emoticons. For example, (smile) and 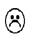 (sad face) are associated with the input member for the colon ":" character, which is the character that begins the text equivalent of these emoticons, namely ":)" and ":(". In other example embodiments, all emoticons are associated with the input member for the colon character, not just those that start with a colon. In other example embodiments, a representation also includes chat acronyms, such that LOL, L8R, and LMK are associated with the input member for the character "L." In other example embodiments, punctuation marks used at the end of a sentence are representations associated with the input member for the period "." character. Memory 110 stores a table of the representations associated with each input member. In example embodiments, memory 110 stores a different table of representations for each language pack loaded in memory 110. In other example embodiments, representations are dependent upon the type of editing application the user is using. In such embodiments, a text message editor has a different representation table than an email message editor.

In some example embodiments, representations are virtually associated with an input member. For example, actuating a "symbols" input member causes the device to display a virtual mapping of symbols to the various input members. When such a virtual map is displayed, processor 102 determines the representations associated with the symbol shown on the virtual map and not the representations shown on the face of the input member. For example, if a user actuates the "symbol" input member, processor 102 displays a virtual mapping that maps the single quote character to the input member associated with the "L" character. With the virtual map displayed, the user touches the input member associated with the "L" character without releasing it and then further actuates the input member (e.g. applies temporary additional pressure to the input member). In response, processor 102 determines the representations associated with the single quote character, such as a forward facing single quote and a backwards facing single quote, rather than determining the representations associated with the "L" character. In this manner processor 102 accesses and displays representations associated with characters not shown on the face of the input members.

At Step 320, processor 102 optionally orders the representations so that, for example, the most frequently used representation appears first in a list. As previously described, memory 110 stores an association between a representation and an input member. In addition, memory 110 also stores a frequency object for each representation. In the example embodiment presently described, processor 102 uses these frequency objects to order the representations. In addition, processor 102 updates the frequency objects when a user selects a representation. Thus, the frequency objects reflect the frequency with which a user uses a particular representation.

In other example embodiments, processor 102 orders the representations so that the most probable representation appears first in the list. In such embodiments, processor 102 uses a dictionary, wordlist, vocabulary, or other corpus of words, stored in memory 110, to determine what representation is most likely to come next, given what has already been input by the user. In yet other example embodiments, a language pack is loaded in memory 110 and the language pack determines the order the representations. In yet other example embodiments, accented characters are always displayed so that letters with a grave accent show first, letters with an ague accent show second, etc.

In Step 325, processor 102 causes display of the representations on an output apparatus. A display of one representation, the first representation in the ordered list, shown in the current text output position of display 112 has the least impact on the flow of typing. A display of a single representation at a time minimizes the distraction caused by having to search through items in a list or menu. However, disclosed embodiments are not limited to a display of one representation at a time, and the display of representations may include a horizontal display, a vertical display, a matrix display, a circular display, or a layered display of a plurality of representations. An example of a layered display using semi-transparent layered windows is found in U.S. Application No. 12/965,560, which is incorporated herein by reference.

One of the representations in the display is marked for selection. In a display showing one representation at a time, the currently displayed representation is marked for selection. In a display with two or more representations, such a marking is accomplished, for example, through underlining, a box around the representation, a different color background, or any other method that differentiates one of the displayed representations from the others. In a layered windows display the representation in the top-most window is considered marked for selection.

In Step 330, processor 102 determines if the first state has ended through, for example, release of the input member. If so (Step 330, Yes), then, at Step 345, the representation marked for selection is selected for output to the output device as the desired input. If not (Step 330, No), then in Step 335 processor 102 determines if a second state, for example the temporary application of additional pressure, has occurred. If processor 102 detects the occurrence of the second state, then in Step 340, processor 102 changes the representation marked for selection. In example embodiments, this involves changing the box around the representation, rotating the layers, or changing the representation displayed, depending on the method used to display the representations. After changing the representation marked for selection, or if no second state has occurred (Step 335, No), processing continues at Step 330.

In an alternative example embodiment, processor 102 skips Step 310 and instead performs Steps 315-345 after the input member has been in the first state for a pre-determined amount of time (e.g. a pause). Such an input is a press-and-hold (or touch-and-hold) input and occurs after a required delay of the pre-determined amount of time. In example embodiments, the display of representations after a pause (i.e. a press-and-hold input) differs from the display of representations created without the pause. For example, device users familiar with accented characters are familiar with the order in which the characters appear, and do not want to wait for a pause to select an accented character nor scroll through a display of several characters. Such users likely prefer a display of a single character at a time and find process 300, which causes the display of representations immediately after detecting the occurrence of a second state during the first state, most helpful. Process 300 allows the user to begin entry of accented characters without having to wait for the delay required to detect a press-and hold of an input member. A single character display also reduces the amount of time need to create the display and the amount of time familiar users require to find and select a character.

But users unfamiliar with accented characters likely desire a display showing many representations and are not bothered by the interruption in typing caused by having to pause to wait for the display of representations to appear. Therefore, example embodiments include both types of displays of representations, with a first type of representation display created for process 300 as shown in Figure 3 and a second type of representation display created after processor 102 detects a press-and-hold of the input member for the pre-determined amount of time.

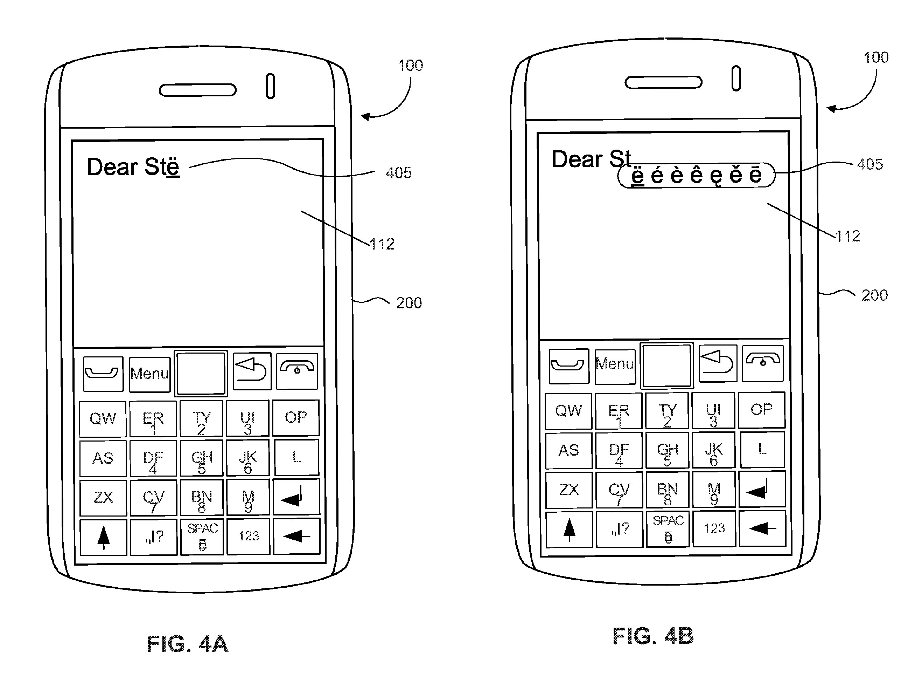

An example of a process using an input member capable of producing two inputs to select a character with an accent mark will now be explained using Figures 4 through 6. In the example of Figures 4 through 6, a user desires to enter text for a message by beginning with "Dear Stéphane." After typing the "t" in Stéphane, the user touches or presses and continues to touch or press the input member for the character "e," resulting in the input member entering a first state. At this time, the output apparatus 102 optionally displays "Ste," the "e" being a default character displayed in response to entering the first state. During the first state, the user further actuates the input member by, for example, temporarily applying additional pressure to the input member, resulting in the occurrence of a second state for the input member. The second state need last only long enough for detection by processor 102. In other example embodiments, processor 102 recognizes the occurrence of the second state after a predetermined amount of time elapses during the first state.

After detecting the occurrence of the second state for the input member, processor 102 causes the creation of a display of representations associated with the input member for the "e" character, with one representation marked for selection. In disclosed embodiments, the resulting display appears similar to display 405 in Figure 4A, with the "ë" representation marked for selection because it is the only representation shown in display 112. Alternative example embodiments display multiple representations, as shown in Figure 4B. As discussed above, the display may take any number of formats, and disclosed embodiments are not dependent upon any particular format and are not limited to the displays used in Figures 4A and 4B.

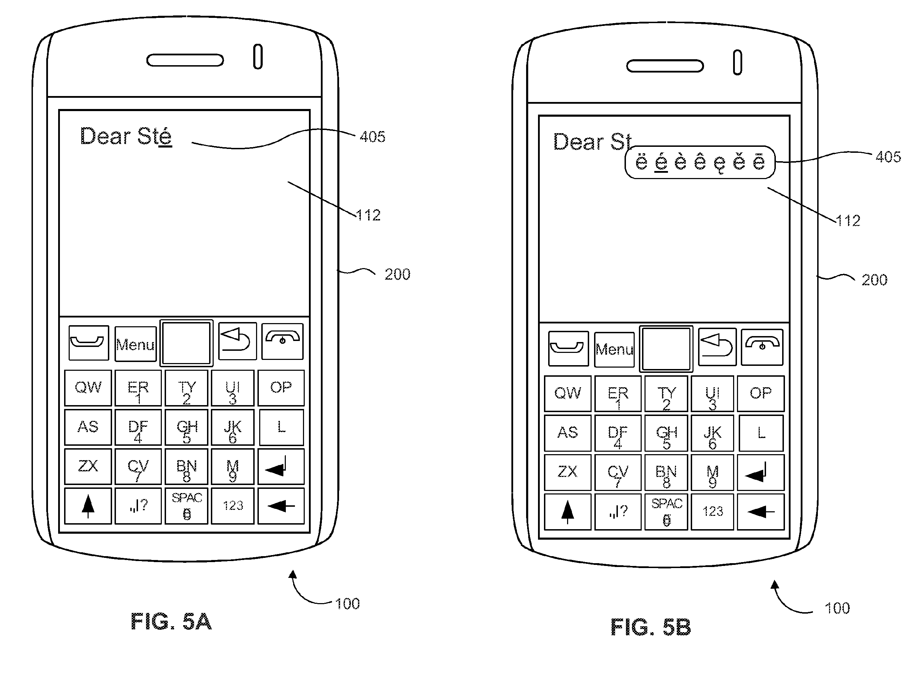

After viewing the display of representations, the user determines that the representation marked for selection is not the desired representation. In this case, the user temporarily further actuates (i.e. adds additional pressure to the input member or leans on the input member), causing processor 102 to detect the occurrence of the second state. After detecting this second state, processor 102 changes the representation marked for selection. In a display showing one representation at a time, the resulting display appears as display 405 in Figure 5A. In an example embodiment showing multiple representations, the resulting display appears as display 405 in Figure 5B. In either case, the "é" representation is now marked for selection. If the desired representation is still not marked for selection, the user repeats the further actuation that causes the occurrence of the second state until the desired representation is marked for selection.

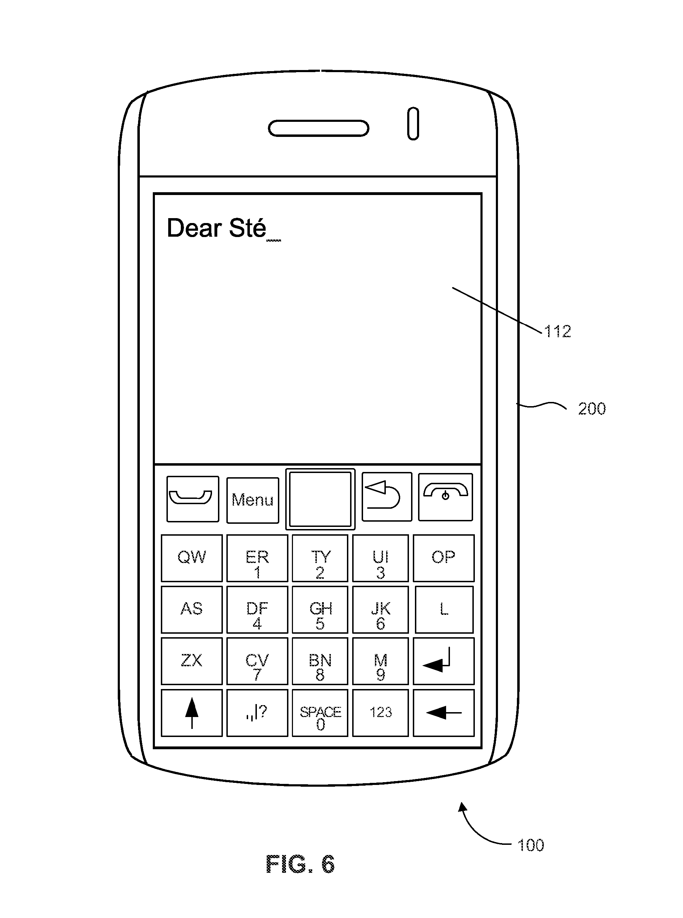

Once the user determines that the desired representation is marked for selection the user releases the input member for the "e" character, ending the first state. Processor 102 detects the release of the input member as the end of the first state and in response selects the representation marked for selection for output to an output apparatus as the desired input, and prepares for another text input. This results in a display similar to that of Figure 6. The user then types the remaining characters of "Stéphane" and continues drafting the message.

In some example embodiments, processor 102 changes the type of display of representations before the user has selected a representation. For example, a user may initially touch the input member associated with the "e" character, resulting in the input member entering a first state. During this first state, the user further actuates the input member without releasing the touch, resulting in the occurrence of a second state. In response to the occurrence of the second state, processor 102 displays the representations associated with the "e" character as shown in Figure 4A, described above. However, if the user continues to touch the input member associated with the "e" character for a predetermined amount of time (stays in the first state) without causing the occurrence of another second state, processor 102 changes the display from that shown in Figure 4A to that shown in Figure 4B. In this manner the system may assist the user in the entry of a representation when the system detects a delay in the user's selection of a representation using the display of one representation at a time.

The present disclosure may be embodied in other specific forms without departing from its spirit or essential characteristics. Other embodiments of the invention will be apparent to those skilled in the art from consideration of the specification and practice of the invention disclosed herein. The described embodiments are to be considered in all respects only as illustrative and not restrictive, with the true scope and spirit of the invention being indicated by the following claims rather than by the foregoing description. All changes that come within the meaning and range of equivalency of the claims are to be embraced within their scope.

## Claims

1. A method of selecting input in a portable electronic device comprising a display (112) and a plurality of input members (220), at least some of the plurality of input members capable of achieving a first state and a second state, the method comprising:
detecting an actuation of one of the plurality of input members;
in response to detecting the actuation, entering a first state (305);
during the first state, detecting an occurrence of a second state (310), the occurrence reflecting completion of a further actuation of the actuated input member;
in response to detecting the occurrence of the second state, determining a plurality of representations associated with the actuated input member (315);
outputting for selection at least one of the plurality of representations on the display (325), the at least one representation being marked for selection;
detecting an end of the first state for the input member (330), which reflects a release of the actuated input member; and
in response to detecting the end of the first state, outputting the representation marked for selection on the display (345).

2. The method of claim 1 or claim 2, further comprising:
detecting an occurrence of another second state for the actuated input member;
in response to detecting the another second state, changing the representation marked for selection;

3. The method of claim 1 or claim 2, wherein the plurality of representations include a plurality of accented characters corresponding to at least one character associated with the actuated input member.

4. The method of claim 1 or claim 2, wherein the plurality of representations include a plurality of emoticons, each emoticon beginning with a character associated with the actuated input member.

5. The method of claim 1 or claim 2, wherein the plurality of representations include a plurality of short message service abbreviations, the first character of each abbreviation associated with a character associated with the actuated input member.

6. The method of any of claims 1-5, wherein the plurality of representations include representations associated with a first character and representations associated with a second character, wherein the first character and the second character are each associated with the actuated input member.

7. The method of any of claims 1-6, wherein entering the first state occurs from a press of the one of the plurality of input members and the second state occurs during additional pressure applied to the one of the plurality of input members.

8. The method of any of claims 1-6, wherein entering the first state occurs from a touch of the actuated input member and the second state occurs during a press of the actuated input member.

9. The method of any of claims 1-6, wherein entering the first state occurs from a touch of the actuated input member and the second state occurs as a result of the elapse of a predetermined amount of time.

10. A portable electronic device comprising:
a processor (102, 116));
an output apparatus (112)
a plurality of input members (220) at least some of the plurality of input members capable of achieving a first state and a second state; and
a memory (110) comprising representations associated with at least some of the plurality of input members,
the processor being adapted to:
detect an actuation of one of the plurality of input members,
in response to detection of the actuation, entering a first state (305),
during the first state, detect an occurrence of a second state (310), the occurrence reflecting completion of a further actuation of the actuated input member,
in response to detection of the occurrence of the second state, determine a plurality of representations associated with the input member in the first state (315),
cause the output of at least one of the plurality of representations using the output apparatus (325), the at least one of the representations being marked for selection,
detect an end of the first state for the input member (330), which reflects a release of the actuated input member, and
in response to detection of the end of the first state, cause the representation marked for selection to be output using the output apparatus (345).

11. The device of claim 10 wherein the processor is further adapted to:
detect an occurrence of another second state for the input member in the first state; and
in response to detecting the another second state, change the representation marked for selection.

12. The device of claim 10 or claim 11, wherein entering the first state occurs from a press of the one of the plurality of input members and the second state occurs during additional pressure applied to the one of the plurality of input members.

13. The device of claim 10 or claim 11, wherein entering the first state occurs from a touch of the one of the plurality of input members and the second state occurs during an actuation of the one of the plurality of input members.

14. The device of claim 10 or claim 11, wherein entering the first state occurs from a touch of the one of the plurality of input members and the second state occurs as a result of the elapse of a predetermined amount of time.
